# EUROPEAN PATENT APPLICATION

(11) **EP 4 644 769 A1**
(43) Date of publication of application: **05.11.2025**
(21) Application number: 23910737.8
(22) Date of filing: 27.12.2023
(51) Int. Cl.: F21V 5/04, G02B 3/00, F21V 17/00, F21V 19/00

(54) **ANNULAR LENS AND LAMP**

(30) Priority: 30.12.2022 CN 202223586792 U
(71) Applicant: Suzhou Opple Lighting Co., Ltd., Suzhou, Jiangsu 215211 (CN); Opple Lighting Co,. Ltd., Shanghai 201203 (CN)
(72) Inventor: WANG, Wanlin, Suzhou, Jiangsu 215211 (CN)
(74) Representative: Winter, Brandl - Partnerschaft mbB
(86) International application number: PCT/CN2023/142407
(87) International publication number: WO 2024/140819

(57) **Abstract**

The present application discloses an annular lens, comprising a lens plate and an annular protrusion. The lens plate has an incident surface and an emergent surface; the annular protrusion is arranged on the incident surface; the annular protrusion is provided with a light incident groove extending annularly; a first total internal reflection surface located on the inner side of the annular protrusion and a second total internal reflection surface located on the outer side of the annular protrusion are respectively at the two sides of the light incident groove; the light incident groove comprises a first light incident surface, a second light incident surface and a third light incident surface; the first light incident surface is opposite to the first total internal reflection surface; the second light incident surface is opposite to the second total internal reflection surface; in an extension direction from the first light incident surface to the second light incident surface, the third light incident surface is a curved surface that is first raised toward the opening of the light incident groove and then lowered, and the light incident apex of the third light incident surface is close to the first light incident surface. The present application further discloses a lamp.

## Description

### TECHNICAL FIELD

The present disclosure relates to the field of lighting technology, and particularly to an annular lens and a lamp.

### BACKGROUND

Annular lens is an optical processing element commonly used in lighting devices. The annular lens includes a lens plate and an annular protrusion, the lens plate has a light incident surface and a light exit surface, the annular protrusion is arranged on the light incident surface, and the annular protrusion is provided with an annularly extending light incident groove, the light incident groove has a first light incident surface, a second light incident surface and a third light incident surface. The annular lens in the existing technology tends to exhibit chromatic aberration, such as a bluish tinge in the central spot and a yellowish tinge in subsidiary spots. The conventional solution is to apply texturing or microstructures onto the light exit surface of the annular lens, which will affect the optical efficiency of the lamp, and compromise the transparency of the annular lens, thus reducing the perceived quality of the product.

### SUMMARY

The purpose of the present disclosure is to provide an annular lens to solve the problem of bluish tinge in light spots.

Another object of the present disclosure is to provide a lamp.

In order to achieve the above objectives, the present disclosure adopts the following technical solutions.

An annular lens, including a lens plate and an annular protrusion. The lens plate has a light incident surface and a light exit surface, the annular protrusion is arranged on the light incident surface, and the annular protrusion is provided with an annularly extending light incident groove, a first total reflection surface located at an inner side of the annular protrusion and a second total reflection surface located at an outer side of the annular protrusion are arranged at two sides of the light incident groove, respectively. The light incident groove has a first light incident surface, a second light incident surface and a third light incident surface; the first light incident surface is opposite to the first total reflection surface; the second light incident surface is opposite to the second total reflection surface; in an extending direction from the first light incident surface to the second light incident surface, the third light incident surface is a curved surface that is first protruded towards an opening direction of the light incident groove and then concaved, and a vertex of light-incident protrusion of the third light incident surface is close to the first light incident surface.

In the present disclosure, the first total reflection surface and the second total reflection surface include a plurality of segments of total reflection curved surfaces from the light incident groove to the light incident surface.

In the present disclosure, a number of the plurality of segments of total reflection curved surfaces is three.

In the present disclosure, an incident eccentricity angle of the third light incident surface is 10 degrees to 40 degrees.

In the present disclosure, the annular lens is made of a transparent acrylic material, a transparent PC material, or a transparent PS material.

In the present disclosure, a plurality of annular protrusions is provided, and the plurality of annular protrusions are concentrically arranged on the light incident surface.

A lamp, including a lamp body, a light source and the above-described annular lens. The lamp body is provided with a light-emitting cavity, the light source is arranged on a bottom surface of the light-emitting cavity, and the annular lens is arranged to cover the light source to distribute light emitted by the light source.

Compared with the existing technology, the present disclosure has the following advantages.

In the annular lens of the present disclosure, the third light incident surface is a curved surface, and the vertex of light-incident protrusion of the curved surface is closer to the first light incident surface. After the light incident from the third light incident surface is refracted, the light spot as generated is deviated from the center, which effectively mitigates the problem of bluish tinge in the central spot while maintaining well-uniform color temperature throughout the entire light spot.

### BRIEF DESCRIPTION OF DRAWINGS

Fig. 1 is a perspective view of a preferred embodiment of an annular lens of the present disclosure.
Fig. 2 is a cross-sectional view of a preferred embodiment of an annular lens of the present disclosure.
Fig. 3 is an optical path diagram of a preferred embodiment of an annular lens of the present disclosure.
Fig. 4 is a cross-sectional view (partially enlarged view) of a preferred embodiment of an annular lens of the present invention.
Fig. 5 is a cross-sectional view of a preferred embodiment of a lamp of the present disclosure.

In the drawings:
1: annular lens; 100: lens plate; 110: light incident surface; 120: light exit surface; 200: annular protrusion; 210: light incident groove; 211: first light incident surface; 212: second light incident surface; 213: third light incident surface; 220: first total reflection surface; 230: second total reflection surface; 2: light source; 3: lamp body; 31: light-emitting cavity; a: incident eccentricity angle; h: vertex of light-incident protrusion.

### DETAILED DESCRIPTION

The specific implementations of the present disclosure will be further described in detail below with reference to the accompanying drawings and embodiments. The following embodiments are used to illustrate the present disclosure but are not intended to limit the scope of the present disclosure.

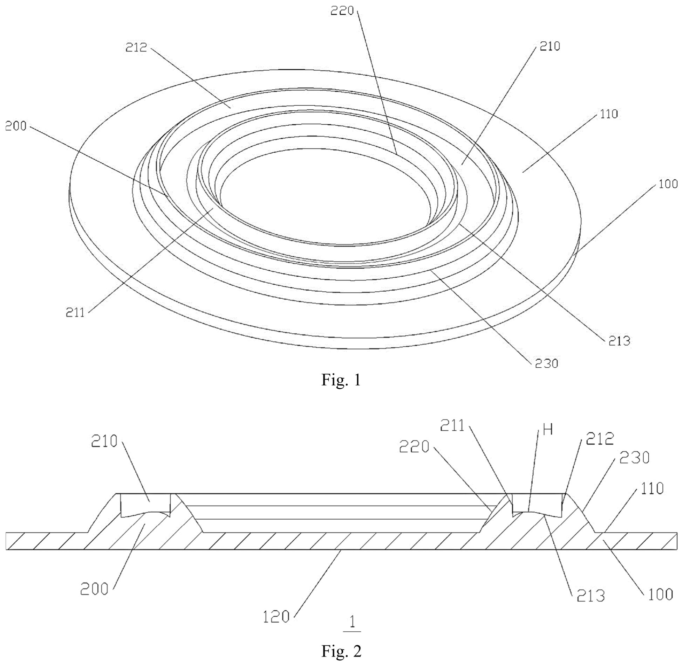

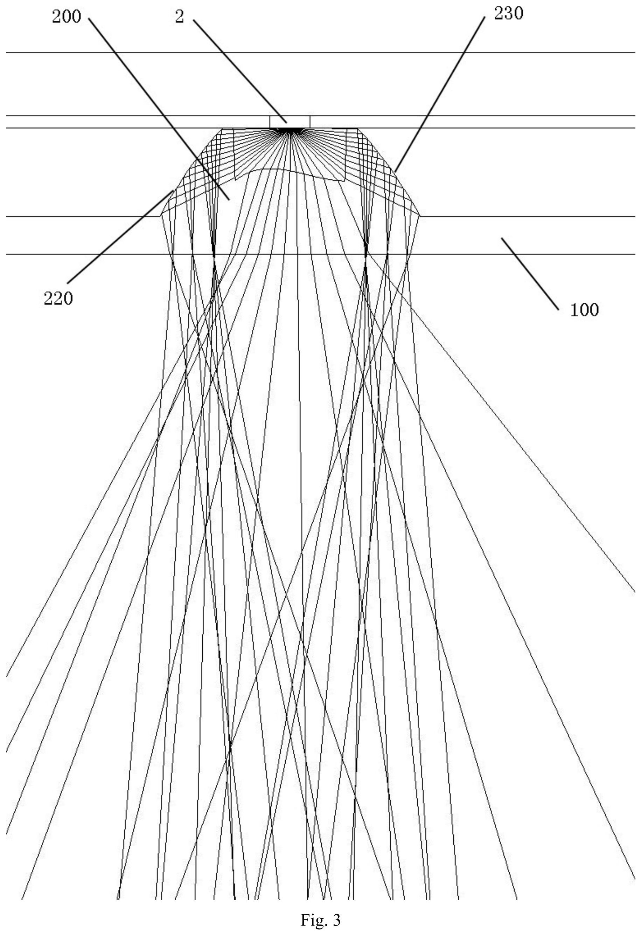

As shown in Figs. 1 to 4, a preferred embodiment of an annular lens of the present disclosure is shown. The annular lens 1 includes a lens plate 100 and an annular protrusion 200, the lens plate 100 has a light incident surface 110 and a light exit surface 120, the annular protrusion 200 is arranged on the light incident surface 110, and the annular protrusion 200 is protruded from a surface of the light incident surface 110 of the lens plate 100 and is integrally formed with the lens plate 100. The top of the annular protrusion 200 is provided with an annularly extending light incident groove 210; a first total reflection surface 220 located at an inner side of the annular protrusion 200 and a second total reflection surface 230 located at an outer side of the annular protrusion 200 are arranged at two sides of the light incident groove 210, respectively. The light incident groove 210 has a first light incident surface 211, a second light incident surface 212 and a third light incident surface 213, the third light incident surface 213 is a bottom surface of the light incident groove 210, the first light incident surface 211 is a side surface of the light incident groove 210 close to the first total reflection surface 220, and the second light incident surface 212 is a side surface of the light incident groove 210 close to the second total reflection surface 230. The first light incident surface 211 is opposite to the first total reflection surface 220, that is, the first light incident surface 211 is close to an annular inner side surface of the annular protrusion 210, and the light incident from the first light incident surface 211 is at least partially reflected by the first total reflection surface 220. The second light incident surface 212 is opposite to the second total reflection surface 230, that is, the second light incident surface 212 is close to an annular outer side surface of the annular protrusion 210, and the light incident from the second light incident surface 212 is at least partially reflected by the second total reflection surface 230. In an extending direction from the first light incident surface 211 to the second light incident surface 212, the third light incident surface 213 is a curved surface that is first protruded towards an opening direction of the light incident groove 210 and then concaved, and a vertex H of light-incident protrusion of the third light incident surface 213 is close to the first light incident surface 211, that is, a distance between the vertex H of light-incident protrusion and the first light incident surface 211 is smaller than a distance between the vertex H of light-incident protrusion and the second light incident surface 212. As shown in Fig. 3, in this embodiment, a cross section of the third light incident surface 213 is in the shape of a sinusoidal curve from one side of the first light incident surface 211 to one side of the second light incident surface 212.

As shown in Fig. 3, the light source 2 is arranged at an opening of the light incident groove 210, and light is emitted from the light source 2 and enters the annular protrusion 200 at the first light incident surface 211, the second light incident surface 212 and the third light incident surface 213 of the light incident groove 210. The light incident from the first light incident surface 211 undergoes a total reflection at the first total reflection surface 220, the light incident from the second light incident surface 212 undergoes a total reflection at the second total reflection surface 230, and the light passes through the annular protrusion 200 and the lens plate 100 respectively and exits the annular lens 1 through the light exit surface 120. Since the third light incident surface 213 is a curved surface, and the vertex H of light-incident protrusion of the curved surface is closer to the first light incident surface 211, after the light incident from the third light incident surface 213 is refracted, the light spot as generated is deviated from the center, which effectively mitigates the problem of bluish tinge in the central spot while maintaining well-uniform color temperature throughout the entire light spot.

The lens plate 100 can be in the shape of a flat plate structure in the drawings of this embodiment, or an annular plate structure suitable for the annular protrusion.

Both the first total reflection surface 220 and the second total reflection surface 230 include a plurality of segments of total reflection curved surfaces from the light incident groove 210 to the light incident surface 110. In this embodiment, the first total reflection surface 220 includes three segments of total reflection curved surfaces, and the second total reflection surface 230 includes three segments of total reflection curved surfaces. Since the structures of the first total reflection surface 220 and the second total reflection surface 230 are formed by connecting a plurality of segments of circular arcs, after each arc diffuses the light, the light spots are effectively superimposed and compensate for each other to obtain a light spot with more uniform light color.

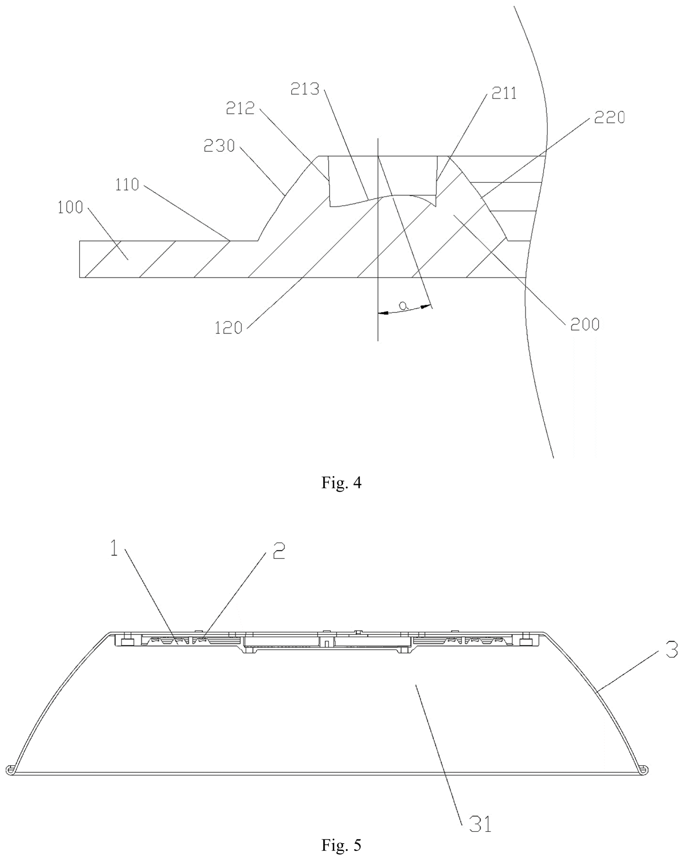

As shown in Fig. 4, an incident eccentricity angle a of the third light incident surface 213 is 10 degrees to 40 degrees, and the incident eccentricity angle a refers to an angle between the light vertically incident on the third light incident surface 213 and a perpendicular line perpendicular to the light exit surface 120.

The annular lens 1 is made of a transparent acrylic material, a transparent PC material or a transparent PS material.

There is a plurality of annular protrusions 200, and the plurality of annular protrusions 200 are concentrically arranged on the light incident surface 110.

As shown in Fig. 5, a lamp is characterized in that it includes a lamp body 3, a light source 2 and an annular lens 1. The lamp body 3 is provided with a light-emitting cavity 31, the light source 2 is arranged on a bottom surface of the light-emitting cavity 31, and the annular lens 1 is arranged to cover the light source 2 to distribute the light emitted by the light source.

It should be noted that the embodiments of the present disclosure are preferred implementations, and are not intended to limit the present disclosure in any way. Any ordinary skilled familiar with the art may use the technical content disclosed above to change or modify it into equivalent effective embodiments. Any modifications or equivalent changes made to the above embodiments based on the technical essence of the present disclosure still fall within the scope of the technical solution of the present disclosure without departing from the content of the technical solution of the present disclosure.

## Claims

1. An annular lens, comprising: a lens plate and an annular protrusion, wherein
the lens plate has a light incident surface and a light exit surface, the annular protrusion is arranged on the light incident surface, the annular protrusion is provided with an annularly extending light incident groove, and a first total reflection surface located at an inner side of the annular protrusion and a second total reflection surface located at an outer side of the annular protrusion are arranged at two sides of the light incident groove, respectively;
the light incident groove has a first light incident surface, a second light incident surface and a third light incident surface, the first light incident surface is opposite to the first total reflection surface, the second light incident surface is opposite to the second total reflection surface, and in an extending direction from the first light incident surface to the second light incident surface, the third light incident surface is a curved surface that is first protruded towards an opening direction of the light incident groove and then concaved, and
a vertex of light-incident protrusion of the third light incident surface is close to the first light incident surface.

2. The annular lens according to claim 1, wherein the first total reflection surface and the second total reflection surface comprise a plurality of segments of total reflection curved surfaces from the light incident groove to the light incident surface.

3. The annular lens according to claim 2, wherein a number of the plurality of segments of total reflection curved surfaces is three.

4. The annular lens according to claim 1, wherein an incident eccentricity angle of the third light incident surface is 10 degrees to 40 degrees.

5. The annular lens according to claim 1, wherein the annular lens is made of a transparent acrylic material, a transparent PC material, or a transparent PS material.

6. The annular lens according to claim 1, wherein a plurality of annular protrusions is provided, and the plurality of annular protrusions are concentrically arranged on the light incident surface.

7. A lamp, comprising a lamp body, a light source and the annular lens according to any one of claims 1 to 6, wherein
the lamp body is provided with a light-emitting cavity, the light source is arranged on a bottom surface of the light-emitting cavity, and the annular lens is arranged to cover the light source to distribute light emitted by the light source.
